# EUROPÄISCHE PATENTANMELDUNG

(11) **EP 2 565 513 A1**
(43) Veröffentlichungstag der Anmeldung: **06.03.2013**
(21) Anmeldenummer: 11179319.6
(22) Anmeldetag: 30.08.2011
(51) Int. Cl.: F17C 1/00, B60H 1/32, B60P 3/20, F25D 3/10

(54) **Tankanordnung und Verfahren zum Speichern und/oder Transportieren tiefkalt verflüssigter Gase**

(71) Anmelder: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Erfinder: Lürken, Franz, 47906 Kempen (DE); Henrich, Helmut, 50259 Pulheim (DE)
(74) Vertreter: Kahlhöfer, Hermann

(57) **Zusammenfassung**

Die vorliegende Erfindung betrifft eine Tankanordnung (1) zum Speichern und/oder Transportieren mindestens eines tiefkalt verflüssigten Gases (LG) in drei oder mehr Einzeltanks (2), die jeweils einzeln und/oder gemeinsam thermisch isoliert und gemeinsam raumsparend dicht nebeneinander angeordnet sind, wobei mindestens zwei der Einzeltanks (2) zur Befüllung mit dem gleichen tiefkalt verflüssigten Gas (LG) vorgesehen sind. Vorzugsweise sind die Einzeltanks (2) zylindrisch geformt und in einer Längsrichtung (L) langgestreckt und weisen einen Außenmantel (4) sowie eine kreisförmige Querschnittsfläche (6) mit einem Mittelpunkt (7) auf und sind in der Längsrichtung (L) parallel ausgerichtet. Mehrere kleine Einzeltanks (2) haben Vorteile bei der Ausnutzung von vorhandenem Bauraum und der Einhaltung einer vorgegebenen Bauhöhe (H) und bei einer Erhöhung des Betriebsdruckes, die bei größeren Tanks dickere Wandstärken und mehr Gewicht verlangen würde. Die vorliegende Erfindung eignet sich daher insbesondere für mobile Anwendungen, bei denen zwei unterschiedliche tiefkalt verflüssigte Gase gleichzeitig transportiert werden, insbesondere für Kühlfahrzeuge, die tiefkalt verflüssigten Stickstoff (LIN) und tiefkalt verflüssigtes Erdgas (LNG) zur Kühlung und zum Antrieb mitführen. Durch die Zahl von vier oder mehr gleichartigen Einzeltanks (2) ist eine flexible Aufteilung des verfügbaren Speicherraums für die beiden Gase je nach den Einsatzbedingungen möglich. Der umweltfreundliche Einsatz von Erdgas kann dadurch ausgeweitet werden. Auch die mobile gleichzeitige Verwendung von flüssigem Sauerstoff (LOX) und flüssigem Stickstoff (LIN) zur direkten Kühlung und Aufrechterhaltung einer der Erdatmosphäre ähnlichen Atmosphäre in einem Kühlfahrzeug ist möglich.

## Beschreibung

Die vorliegende Erfindung betrifft eine Tankanordnung und ein Verfahren zur Speicherung und/oder zum Transport von tiefkalt verflüssigten Gasen, insbesondere zum Speichern und/oder Transportieren von mindestens einem der folgenden tiefkalt verflüssigten Gase: Stickstoff, Erdgas, Sauerstoff und/oder Kohlendioxid.

Im Stand der Technik sind Tanks und Verfahren zum Speichern und/oder Transportieren von tiefkalt verflüssigten Gasen bekannt, so genannte Kryotanks, die durch ihre Konstruktion hinsichtlich verwendeter Materialien und Wärmeisolierung dazu ausgelegt sind, tiefkalt verflüssigte Gase möglichst verlustarm speichern zu können. Die Isolierung wird üblicherweise als Hochvakuumraum mit Strahlungsschutz ausgeführt. In solchen Vorratsbehältern können die verflüssigten Gase normalerweise unter einem gewissen Druck gespeichert werden, wobei ein Sicherheitsventil bei einem zu großen Druck aufgrund verdampfender tiefkalter Flüssigkeit einen Teil des gasförmigen Gases entweichen lässt. Insbesondere sind die herkömmlichen Tanks zylindrisch geformt, da diese Geometrie hinsichtlich der Druckresistenz, insbesondere bei großen Tankvolumina vorteilhaft ist. Aufgrund der zylindrischen Form der Tanks und der entsprechenden Rundungen kann allerdings der zur Verfügung stehende Bauraum oft nicht optimal genutzt werden. Außerdem benötigen Vakuumisolierung und Strahlungsschilde zum Schutz vor äußerer Wärmeeinwirkung weiteren Bauraum, wodurch das nutzbare Tankvolumen in dem zur Verfügung stehenden Bauraum begrenzt wird. Darüber hinaus ist die Konstruktion eines Vakuumraums sehr kostenintensiv und zusätzliche Strahlungsschilde erhöhen das Gewicht des Tanks. Bei großen Tankvolumina werden außerdem mit dem Umfang steigende Wandstärken notwendig, falls der Betriebsdruck erhöht werden soll. Dies führt entweder zu höheren Kosten und Gewicht aufgrund des größeren Materialeinsatzes oder zu einem beschränkten Anwendungsbereich der Tanks, was die Betriebsdrücke angeht. Manche Motoren, die mit gasförmigem Brennstoff, insbesondere Erdgas, betrieben werden, benötigen einen Versorgungsdruck von mehr als 10 bar, insbesondere 20 oder sogar bis zu 30 bar, was die Verwendung von Kryotanks für diese Anwendungen einschränkt.

Wenn zwei oder mehr tiefkalt verflüssigte Gase gleichzeitig gespeichert und/oder transportiert werden sollen, so werden zwei oder mehr solcher Tanks benötigt, und die genannten Auswirkungen bezüglich Kosten, Betriebsdruck und Gewicht addieren sich.

Aufgabe der Erfindung ist es, die aus dem Stand der Technik bekannten Probleme zumindest teilweise zu lösen und insbesondere eine Tankanordnung und ein Verfahren anzugeben, die es ermöglichen, tiefkalt verflüssigte Gase flexibel, wirtschaftlich, platzsparend und bei Bedarf unter erhöhtem Druck zu speichern und/oder zu transportieren.

Zur Lösung dieser Aufgabe dienen eine Tankanordnung nach Anspruch 1 sowie ein Verfahren nach Anspruch 12. Vorteilhafte Ausgestaltungen der Erfindung, die einzeln und in sinnvollen Kombinationen miteinander eingesetzt werden können, sind in den jeweils abhängigen Ansprüchen angegeben.

Die Aufgabe wird gelöst durch eine erfindungsgemäße Tankanordnung zum Speichern und/oder Transportieren mindestens eines tiefkalt verflüssigten Gases in drei oder mehr Einzeltanks, die jeweils einzeln und/oder gemeinsam thermisch isoliert und gemeinsam raumsparend dicht nebeneinander angeordnet sind. Mindestens zwei der Einzeltanks sind dabei zur Befüllung mit dem gleichen tiefkalt verflüssigten Gas ausgebildet bzw. verbunden. Werden die Einzeltanks für unterschiedliche tiefkalt verflüssigte Gase benutzt, so ist das besonders vorteilhaft, da die tiefkalt verflüssigten Gase ohne Veränderungen an der Tankkonstruktion in variablen Volumenverhältnissen gespeichert und/oder transportiert werden können.

Die erfindungsgemäße Tankanordnung ist vor allem ohne Änderungen des Konstruktionsprinzips sehr flexibel und vielseitig anwendbar, insbesondere aufgrund eines modularen Aufbaus aus einzelnen in einer Mehrzahl von Kombinationen zusammensetzbaren Einzeltanks. Es besteht die Möglichkeit die Einzeltanks als Rohlinge zu fertigen und dann mit Blick auf die gewünschte Anwendung und den verfügbaren Platz gezielt platzsparend zusammen zu bauen. Dies führt auch zu wirtschaftlichen und fertigungstechnischen Vorteilen, da aufgrund der zahlreichen Einsatzmöglichkeiten die Stückzahlen der Einzeltanks und der gesamten Tankanordnungen steigen und somit Fertigungskosten gesenkt werden können.

Vor allem die Möglichkeit, zwei tiefkalt verflüssigte Gase in unterschiedlichen relativen Volumenverhältnissen in einer gemeinsamen Anordnung zu speichern und zu transportieren, sowie gegebenenfalls durch den Aufbau vorteilhafte Wechselwirkungen bei Speicherung verschiedener tiefkalt verflüssigter Gase erzielen zu können, begründen die außerordentliche Nützlichkeit der erfindungsgemäßen Tankanordnung. Besteht die Tankanordnung zum Beispiel aus vier Einzeltanks und ist zur Speicherung von zwei unterschiedlichen tiefkalt verflüssigten Gasen ausgelegt, so können diese in den Volumenverhältnissen 4:0, 3:1, 2:2, 1:3 oder 0:4 gespeichert und/oder transportiert werden. Wird eine solche Tankanordnung beispielsweise in einem mit Erdgas angetriebenen und mit Stickstoff gekühltem Kühltransporter verwendet, so kann tiefkalt verflüssigtes Erdgas je nach Transporterfordernissen in einem, zwei oder drei der vier Tanks gespeichert werden, je nach zu erwartenden Fahrstrecken und Häufigkeit der Ladevorgänge und sonstigen Fahrtunterbrechungen. In den übrigen Tanks wird flüssiger Stickstoff gespeichert. Während der Fahrt wird die Kälte aus dem verdampfenden Erdgas zur Kühlung genutzt, bei Fahrtunterbrechungen und Ladevorgängen der tiefkalt verflüssigte Stickstoff, der außerdem zum Kühlen des Erdgases in den anderen Tanks genutzt werden kann, so dass dort keine Abdampfverluste auftreten. Nahezu baugleiche Fahrzeuge können also unterschiedlich betankt und genutzt werden.

Die Einzeltanks, welche in der Regel als Kryotanks, das heißt wärmeisolierte Speicherbehälter für tiefkalte Flüssigkeiten, ausgeführt sind, werden erfindungsgemäß sehr platzsparend und dicht nebeneinander angeordnet, wodurch ein Raum- und Gewichtsvorteil der gesamten Tankanordnung im Vergleich zu großen Einzeltanks erzielt wird. Dieser Vorteil wird auch erreicht, wenn nur ein tiefkalt verflüssigtes Gas in allen Einzeltanks gespeichert beziehungsweise transportiert wird. Darüber hinaus bietet die Tankanordnung vorteilhafte thermische Isolierungsmöglichkeiten, da vorhandener, nicht zylindrischer Bauraum besser genutzt werden kann und die äußere Wärmeeinstrahlung und somit der Wärmeeintrag kaum größer als bei zylindrischen Tanks ist. Damit ist für eine äußere thermische Isolierung der erfindungsgemäßen Tankanordnung nur wenig zusätzliches Isolationsmaterial erforderlich. Hierbei finden insbesondere Polyurethane Anwendung. Weiterhin kann die Isolierung derart ausgeführt sein, dass diese zur mechanischen Stabilität der Tankanordnung beiträgt und somit beispielsweise der Einbau zusätzlicher Stützstreben vermieden werden kann, wodurch der Materialverbrauch und das Gewicht der Tankanordnung weiter verringert werden kann. Auch neuere Isoliermaterialien, wie zum Beispiel Schüttungen aus winzigen Hohlkugeln, insbesondere Glaskugeln, können Anwendung finden.

In einer Ausführungsform der Erfindung sind die Einzeltanks für Drücke bis 10 bar, vorzugsweise bis 20 bar und besonders bevorzugt bis 30 bar ausgelegt. Dies sind für Kryotanks unüblich hohe Drücke, obwohl sie noch weit unterhalb der für die Speicherung von Gasen bei Normaltemperatur üblichen Drücke von Gasflaschen und Druckspeichern liegen. Durch den vorgeschlagenen Druckbereich vergrößern sich die Möglichkeiten der Anwendung der Tankanordnung.

Die erfindungsgemäße Tankanordnung ist bevorzugt zum Speichern und/oder Transportieren von tiefkalt verflüssigtem Erdgas, tiefkalt verflüssigtem Stickstoff, tiefkalt verflüssigtem Sauerstoff und/oder tiefkalt verflüssigtem Kohlendioxid ausgelegt, jedoch nicht auf diese Gase beschränkt.

Die Einzeltanks sind bevorzugt nicht nur für ein spezielles tiefkalt verflüssigtes Gas ausgelegt, sondern können für unterschiedliche Gase eingesetzt werden. Dadurch kann die Tankanordnung gegebenenfalls nicht nur zur Speicherung und/oder zum Transport einer bestimmten Gas-Kombination eingesetzt werden, sondern bietet die Möglichkeit die Volumenverhältnisse und Gassorten zu variieren. Hierzu kann es sinnvoll oder notwendig sein, die Einzeltanks bei Wechsel der zu speichernden tiefkalt verflüssigten Gase vor dem entsprechenden Befüllungsvorgang zu spülen und/oder zu reinigen. Für solche Anwendungen ist es vorteilhaft, wenn jeder Einzeltank über mindestens eine Anschlussleitung verfügt, die nach außen geführt ist.

In einer vorteilhaften Ausgestaltung der Erfindung sind die Einzeltanks derart angeordnet, dass mindestens eine Wärmebrücke zwischen zwei oder mehr Einzeltanks vorhanden ist, so dass Wärme zwischen diesen Einzeltanks übertragbar ist. Dadurch kann insbesondere bei Speicherung und/oder Transport zweier unterschiedlicher tiefkalt verflüssigter Gase, eines der tiefkalt verflüssigten Gase zur Kühlung des anderen tiefkalt verflüssigten Gases mit einer höheren Siedetemperatur benutzt werden. Dadurch ergeben sich weniger Abdampfverluste des höher siedenden Gases. Beispielsweise kann flüssiger Stickstoff dazu benutzt werden das Verdampfen von flüssigem Erdgas zu vermeiden.

In einer weiteren vorteilhaften Ausgestaltung der Tankanordnung sind die Einzeltanks zylindrisch geformt und in einer Längsrichtung langgestreckt. Insbesondere weisen die Einzeltanks einen Außenmantel und eine kreisförmige Querschnittsfläche auf und sind in der Längsrichtung parallel ausgerichtet. Besonders vorteilhaft ist es hierbei, wenn die Mittelpunkte der kreisförmigen Grundflächen ein Vieleck aufspannen, insbesondere ein Dreieck oder Trapez für eine ungerade Anzahl von Einzeltanks und ein Parallelogramm bei einer geraden Anzahl von Einzeltanks. Bei typischen Anwendungen ist bezüglich der Innenmaße das Verhältnis von Länge zu Durchmesser der Einzeltanks größer als 5, vorzugsweise größer als 10,

Ein zylindrischer Einzeltank weist eine kreisförmige Querschnittsfläche, mit Radius und Mittelpunkt, sowie eine Länge in Längsrichtung auf. Die erfindungsgemäße Tankanordnung nutzt die Tatsache, dass die Volumina und Manteloberflächen zylindrischer Tanks sich bei gleicher Tanklänge zueinander verhalten wie die Kreisflächen zu den Umfängen der Querschnittsflächen. Das bedeutet beispielsweise, dass bei gleicher Länge vier kleinere Einzeltanks mit dem halben Radius der Querschnittsfläche eines größeren Tanks das gleiche Volumen aufweisen wie der größere Tank. Die gesamte Mantelfläche der vier kleineren Einzeltanks ist dann zwar größer als diejenige des größeren Tanks, die Wandstärke kann bei den vier kleineren Einzeltanks allerdings für einen gleichen Betriebsdruck verringert werden. Folglich ist das Gewicht der vier Einzeltanks im Vergleich zu dem größeren Tank mit demselben Speichervolumen nicht erhöht. Dafür lassen sich kleinere Tanks aber leichter an vorgegebene Platzverhältnisse anpassen, was insbesondere bei mobilen Anwendungen von Bedeutung ist. Gerade bei Fahrzeugen werden Tanks möglichst weit unten eingebaut, um den Schwerpunkt der Fahrzeuge tief zu halten. Tanks mit großem Durchmesser können oft wegen der andererseits erforderlichen Bodenfreiheit und anderer Randbedingungen nicht untergebracht werden. Bei einer Erhöhung des Betriebsdruckes sind kleinere Tanks ebenfalls leichter zu ertüchtigen als größere. Ebenso ist das Verhalten von Flüssigkeiten in kleineren Tanks bei Kurvenfahrten oder axialen Beschleunigungen weniger kritisch als bei großen Tanks, insbesondere wenn die Tanks nicht vollständig gefüllt sind.

Obwohl zunächst der Eindruck entstehen kann, dass mehrere Einzeltanks mit kleinerer Querschnittsfläche ein vorgegebenes Volumen nicht so gut nutzen können wie ein größerer Tank, so trifft dies für die meisten vorgegebenen Volumenformen nicht zu. Durch die erfindungsgemäßen Anordnungen der kleineren Einzeltanks kann das Speichervolumen im gleichen vorgegebenen Bauraum um bis zu 25% gegenüber einem größeren Tank vergrößert werden.

In einer weiteren vorteilhaften Ausgestaltung der Erfindung sind die Einzeltanks für mindestens zwei verschiedene tiefkalt verflüssigte Gase ausgelegt und über Anschlussleitungen miteinander und/oder mit einer Anwendung verbunden. Die Anschlussleitungen ermöglichen den flexiblen Einsatz der Tankanordnung und eine genaue Anpassung an die gewünschte Funktion in nachgeschalteten Anwendungen.

Besonders bevorzugt werden tiefkalt verflüssigter Stickstoff und tiefkalt verflüssigtes Erdgas oder ein anderes tiefkalt verflüssigtes brennbares Gas getrennt voneinander in den Einzeltanks gespeichert, wobei das tiefkalt verflüssigte Erdgas durch den flüssigen Stickstoff gekühlt beziehungsweise auf einer Temperatur unterhalb seines Siedepunktes gehalten wird. Flüssiger Stickstoff hat bei Normaldruck eine Temperatur von höchstens -196 °C und kann tiefkalt verflüssigtes Erdgas mit einer höheren Siedetemperatur aller Bestandteile als -196 °C auch in der flüssigen Phase kühlen. Die Kühlung des tiefkalt verflüssigten Erdgases verhindert, dass es durch Wärmezufuhr aus der Umgebung unbeabsichtigt verdampft. Es wird so ein verlustfreies Speichern ermöglicht. Daraus ergibt sich der weitere Vorteil, dass das tiefkalt verflüssigte Erdgas seine Zusammensetzung aus unterschiedlichen Komponenten beibehält und sich nicht im Laufe der Zeit mit weniger flüchtigen Bestandteilen, die einen höheren Siedepunkt haben, anreichert.

Durch die Variabilität in den Volumenverhältnissen zwischen dem tiefkalt verflüssigtem Erdgas und dem tiefkalt verflüssigten Stickstoff in der erfindungsgemäßen Tankanordnung, kann diese an vielfältige Bedingungen angepasst werden. Wird der Stickstoff in einer möglichen Anwendung einer erfindungsmäßen Tankanordnung mit beispielsweise vier Einzeltanks nur zur Kühlung des Erdgases benötigt, so können zum Beispiel drei Einzeltanks mit tiefkalt verflüssigtem Erdgas und nur einer mit tiefkalt verflüssigtem Stickstoff gefüllt werden.

In einer anderen Ausgestaltung der Erfindung werden tiefkalt verflüssigter Stickstoff und tiefkalt verflüssigter Sauerstoff getrennt voneinander in den Einzeltanks gespeichert und getrennt voneinander einer Anwendung zugeführt, in der ein Gas sehr ähnlich der Zusammensetzung von Luft benötigt wird. Besonders vorteilhaft ist es, wenn die Gase erst in der Anwendung zu Luft vermischt werden. Luft enthält einen Sauerstoffanteil von etwa 20 %. Daher ist es vorteilhaft, Einzeltanks so nahe wie möglich an einem Volumenverhältnis von 1:4 mit tiefkalt verflüssigtem Sauerstoff beziehungsweise Stickstoff zu füllen, beispielsweise im Falle von fünf Einzeltanks enthielte die Tankanordnung dann vier mit flüssigem Stickstoff und einen mit flüssigem Sauerstoff. Während die Speicherung und Verwendung von verflüssigter Luft, obwohl bei manchen Anwendungen sehr erwünscht, auf viele Schwierigkeiten stößt, ist die erfindungsgemäße getrennte Speicherung und Zusammenführung erst bei Bedarf leicht zu beherrschen. Für die Verwendung in von Personen begehbaren Räumen genügt es, wenn der Sauerstoffgehalt annähernd einen Anteil wie in der Luft aufweist. Eine getrennte Regelung der Zufuhr von Sauerstoff und Stickstoff je nach gemessenem Anteil in dem begehbaren Raum kann meist alle Sicherheitsanforderungen erfüllen.

Besonders vorteilhaft ist es, wenn Innenmäntel mittels Los- und/oder Festlagern in den Einzeltanks angebracht, von einer Zwischenisolierung, insbesondere einem Vakuum, zur weiteren thermischen Isolierung umgeben und mit Anschlussleitungen ausgestattet sind.

Diese Einzeltankkonfiguration bildet eine bevorzugte Grundeinheit für die erfindungsgemäße Tankanordnung. Diese Grundeinheiten können in großen Stückzahlen kostengünstig hergestellt werden und dann über eine Verschaltung entsprechend den Anwendungserfordernissen zusammengesetzt werden. Die Anschlussleitungen sind bevorzugt für die folgenden Einsatzzwecke vorgesehen: Tankanschluss, Verbindungsleitung zu einem anderen Einzeltank und Verbindungsleitung zu einer externen Anwendung.

In einer weiteren Ausführungsform, können Anschlussleitungen an gegenüberliegenden Seiten der Tankanordnung an den Einzeltanks angebracht oder jedenfalls an gegenüberliegenden Seiten der Gesamtanordnung herausgeführt sein. Insbesondere die Leitungen für die Betankung können zur besseren Praktikabilität des Befüllungsvorgangs im täglichen Gebrauch der Anordnung für die Tanks unterschiedlicher tiefkalt verflüssigter Gase an unterschiedlichen Seiten angebracht werden, da unterschiedliche tiefkalt verflüssigte Gase aus unterschiedlichen Vorratsbehältern abgefüllt werden und mit unterschiedlichen Tankzeiten zu rechnen ist. Ein Abstand zwischen den Betankungsöffnungen erleichtert die Bedienung.

In einer weiteren vorteilhaften Ausgestaltung der Tankanordnung weist mindestens ein Einzeltank eine Wärmetauscherleitung auf. Eine Wärmetauscherleitung ist im Wesentlichen eine von einem Gas, einer Flüssigkeit oder einem Wärmeträgermedium durchströmbare Leitung. Durch die Wärmetauscherleitung kann die Temperatur bzw. der Druck in diesem Einzeltank auf einfache Weise geregelt werden. Indem ein Gas, eine Flüssigkeit oder ein anderes Wärmeträgermedium hindurch strömt, welches eine niedrigere Temperatur als das Gas in dem Einzeltank aufweist, kann eine Druckminderung bzw. Herabsetzung der Temperatur erzielt werden. Andererseits kann über die Wärmetauscherleitung auch gezielt Druck in einem Einzeltank aufgebaut werden, indem Wärme in den Einzeltank eingebracht wird.

Besonders vorteilhaft ist es, wenn die Einzelbehälter der Tankanordnung gemeinsam in einem Gehäuse, insbesondere in einem Isolier- und Schutzbehälter, eingebaut sind und ein gemeinsamer Armaturenkasten seitlich in oder an dem Gehäuse installiert ist. Oft wird bei einem vorgegebenen Bauraum nach möglichst weitgehender Ausfüllung mit Einzelbehältern ein seitlicher Bereich frei bleiben, in dem vorteilhaft Armaturen untergebracht werden können. Dies erlaubt die Ausnutzung der vollen Länge des Bauraumes für die Einzeltanks.

Einem weiteren Aspekt der Erfindung folgend wird die Verwendung der erfindungsgemäßen Tankanordnung in einem Kühlfahrzeug, umfassend eine Verbrennungskraftmaschine, vorgeschlagen, wobei das tiefkalt verflüssigte Gas aus mindestens einem Einzelbehälter nach einem Phasenübergang von der flüssigen zur gasförmigen Phase der Verbrennungskraftmaschine zuführbar ist. Außerdem kann mindestens eines der gespeicherten tiefkalt verflüssigten Gase zur Kühlung eines Kühlraumes eingesetzt werden.

Insbesondere eignet sich tiefkalt verflüssigtes Erdgas zum Betrieb einer Verbrennungskraftmaschine eines Kühltransporters, deren Antrieb mit Erdgas erfolgt. Das tiefkalt verflüssigte Gas muss für die weitere Verwendung in gasförmiger Form vorliegen, somit kann die Verdampfungsenergie bei der Phasenumwandlung von flüssig zu gasförmig eingesetzt werden, um einen Kühlraum zu kühlen. In Zeiten, in denen das brennbare Gas nicht zu weiterer Verwendung im gasförmigen Zustand benötigt wird, kann alternativ ein in einem anderen Einzelbehälter mitgeführtes tiefkalt verflüssigtes Gas, insbesondere Stickstoff zur Kühlung des Kühlraums eingesetzt werden. Darüber hinaus kann der tiefkalt verflüssigte Stickstoff über eine Wärmetauscherleitung durch einen oder gegebenenfalls mehrere Einzeltanks mit flüssigem Erdgas geleitet werden, um wie oben beschrieben dieses flüssig zu halten. Vorteilhaft ist hierbei, dass Stickstoff unbedenklich in die Umwelt abgeführt werden kann im Gegensatz zu den meisten brennbaren Gasen. Aus der Kombination der Kühlung von tiefkalt verflüssigtem Erdgas mit flüssigem Stickstoff, der Verwendung beider Gase zur Kühlung eines Kühlraums und der Möglichkeit, beide Gase je nach Bedarf in unterschiedlichen Verhältnissen in der erfindungsgemäßen Tankanordnung mitführen zu können, wird ein Synergie-Effekt bei der Wirtschaftlichkeit erzielt. Es ergeben sich sowohl energetische als auch umwelttechnische Vorteile bei dem kombinierten Einsatz von tiefkalt verflüssigtem brennbarem Gas und flüssigem Stickstoff und der Verwendung der erfindungsgemäßen Tankanordnung, die insbesondere besonders gut in Lastkraftwagen, bevorzugt in Zugmaschinen von Trailern untergebracht werden kann.

Die erfindungsgemäße Tankanordnung kann hierbei auf vielfältige Weise verwendet werden, da die Volumenverhältnisse an die speziellen Anforderungen des Kühlfahrzeugs angepasst werden können. Fahrzeuge für die Feindistribution im städtischen Versorgerverkehr benötigen aufgrund der geringen Fahrleistung nur eine vergleichsweise geringe Menge an Erdgas. Aufgrund der häufigen Türöffnungen und dem damit verbundenen Wärmeeintrag in den Laderaum und der damit verbundenen Notwendigkeit einer schnellen und effektiven Kühlung um die geforderten Solltemperaturen wieder zu erreichen, benötigen diese allerdings eine vergleichsweise große Menge an Stickstoff. In diesem Fall bietet die erfindungsgemäße Tankanordnung den Vorteil, dass die Gase Stickstoff und Erdgas beispielsweise im Verhältnis 3:1 mitgeführt werden können. Für Kühlfahrzeuge im Langstreckenbetrieb ergeben sich vollkommen andere Betriebsbedingungen, da nun wesentlich mehr Erdgas als Brennstoff für die Verbrennungskraftmaschine benötigt wird und dieses auch parallel für die Kühlung eingesetzt werden kann. Der flüssige Stickstoff wird in dieser Einsatzmöglichkeit also in erster Linie zur Kühlung des Erdgases beziehungsweise zur Kühlung des Laderaums in den Standzeiten benötigt. Daher ist hier beispielsweise ein Stickstoff zu Erdgas Verhältnis von 1:3 vorteilhaft.

Die erfindungsgemäße Tankanordnung ermöglicht es ebenfalls, dass dasselbe Kühlfahrzeug in beiden Fällen eingesetzt wird, nach einer entsprechenden Reinigung und einer eventuellen Anpassung der Leitungen oder Umstellung von Armaturen. Dadurch werden Flexibilität sowie Kostenvorteile erzielt.

Außerdem kann aufgrund der kleineren Einzelvolumina auf sogenannte Schwallbleche in den Tanks verzichtet werden, da die Flüssigkeiten bei kleinerem Tankvolumen das Fahrverhalten nicht negativ beeinflussen und keine Einschränkungen in der Fahrstabilität begründen wie dies bei Flüssigkeitstransporten mit großen Tankvolumina der Fall ist.

Es ist darauf hinzuweisen, dass aufgrund der Komplexität und der Vielzahl der Verwendungs- und Kombinationsmöglichkeiten die erfindungsgemäße Tankanordnung auch noch in zahlreichen anderen Anwendungen eingesetzt werden kann und nicht auf die hier exemplarisch beschriebenen Ausführungsformen beschränkt ist. Die für die erfindungsgemäße Tankanordnung offenbarten Details und Vorteile lassen sich auf das erfindungsgemäße Verfahren übertragen und anwenden und umgekehrt.

Die Erfindung sowie ihr technisches Umfeld werden nachfolgend anhand der Zeichnung beispielhaft näher erläutert. Es ist darauf hinzuweisen, dass die Figuren besonders bevorzugte Ausführungsvarianten der Erfindung zeigen, auf die die Erfindung jedoch nicht beschränkt ist. Es zeigen:
- Fig. 1:: eine schematische Darstellung eines Teils einer erfindungsgemäßen Tankanordnung,
- Fig. 2, 3, 4:: verschiedene Anordnungen von Einzeltanks in einer vorgegebenen Einbauhöhe
- Fig. 5:: einen erfindungsgemäßen Einzeltank,
- Fig. 6:: eine schematische Darstellung der erfindungsgemäßen Verbindung von vier Einzeltanks,
- Fig. 7:: schematisch ein Kühlfahrzeug mit einer erfindungsgemäßen Tankanordnung

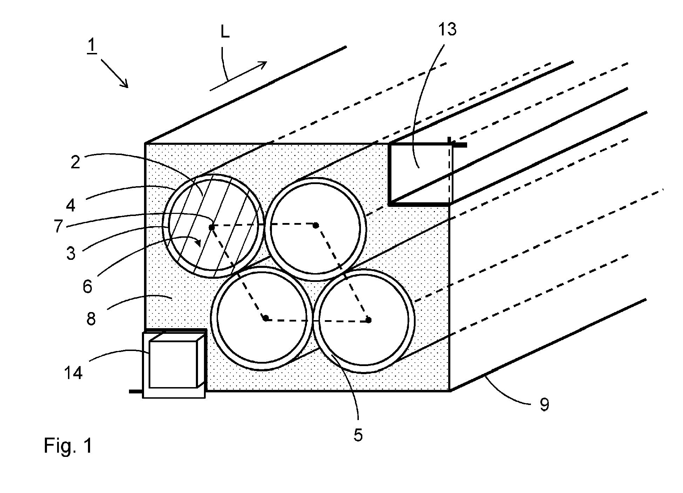

Einige Prinzipien der vorliegenden Erfindung sind schematisch in der Fig. 1 veranschaulicht. Die hier dargestellte Tankanordnung 1 weist vier Einzeltanks 2 auf, die jeweils einen Innenmantel 3, einen Außenmantel 4 und eine dazwischen angeordnete Zwischenisolierung 5 haben. Die Zwischenisolierung 5 ist typischerweise ein Vakuumraum mit darin oder darum angeordneten Strahlungsschilden. Die Einzeltanks 2 sind zylindrisch geformt und in einer Längsrichtung L langgestreckt. Jeder Einzeltank 2 weist eine hier schraffiert angedeutete gesamte Querschnittsfläche 6 mit einem Mittelpunkt 7 auf. Mehrere Einzeltanks 2 sind in Längsrichtung L parallel ausgerichtet möglichst dicht aneinander angeordnet und von einer Außenisolierung 8 und einem Gehäuse 9 umgeben. Die Mittelpunkte 7 von gleichgroßen Querschnittsflächen liegen bei drei unmittelbar benachbarten Einzeltanks 2 immer auf den Eckpunkten eines gleichseitigen Dreiecks. Bei den vier dargestellten Einzeltanks 2 bilden die Mittelpunkte 7 zusammen einen Rombus. Wie die Fig. 1 veranschaulicht, kann man mit einer solchen Konfiguration von gleich großen Einzeltanks 2 einen Quader als Bauraum nicht optimal für ein Speichervolumen nutzen. Trotzdem kann die Konfiguration in der Realität Vorteile haben. Bleibt ein oberer seitlicher Bereich ungenutzt, kann dieser für eine Aussparung 13 verwendet werden, in der beispielsweise ein tragendes Element einer umgebenden Konstruktion verlaufen kann. Auch die diagonal gegenüberliegende Kante des quaderförmigen Bauraumes kann anderweitig verwendet werden, beispielsweise für einen Armaturenkasten 14, in dem Leitungen, Anzeigeinstrumente, Armaturen sowie Einfüllstutzen angeordnet werden können.

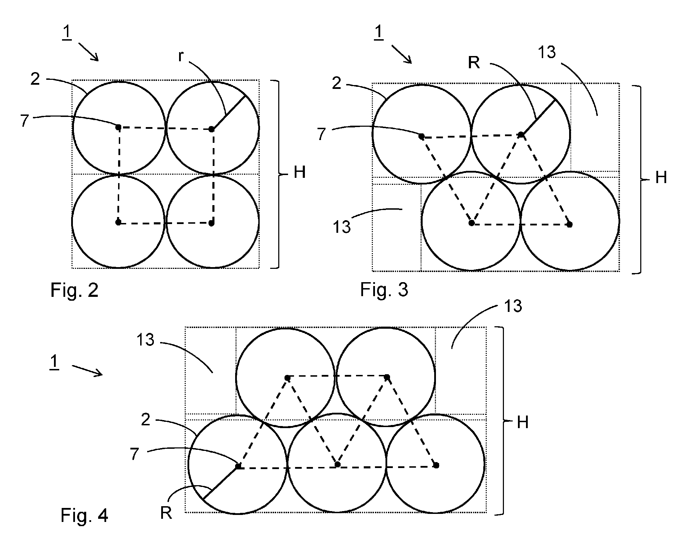

Die Fig. 2, 3 und 4 veranschaulichen verschiedene Anordnungen von Einzeltanks 2 mit einer vorgegebenen Einbauhöhe H. Wie die Fig. 2 zeigt, kann eine Einbauhöhe H zur Unterbringung von vier Einzeltanks 2 jeweils mit dem kleinen Radius r in einer quadratischen Anordnung genutzt werden. Der kleine Radius r entspricht dann einem Viertel der Einbauhöhe H. Geometrisch stellt diese Anordnung den gleichen Speicherplatz zur Verfügung wie ein einziger großer Tank, der in einem gleichgroßen Raum mit quadratischem Querschnitt angeordnet werden könnte. Diese rein geometrische Gegebenheit reicht für eine Beurteilung bei praktischen Anwendungen jedoch nicht aus. Zunächst müssen die notwendigen Isolierungen und deren Dicke berücksichtigt werden, was eher für einen großen Tank statt mehrerer kleiner Tanks spricht, dann jedoch kann auch noch die Frage des zulässigen Betriebsdruckes eine wichtige Rolle spielen. Hier können kleinere Tanks bei gleichem Betriebsdruck mit dünneren Wandstärken ausgelegt werden als große Tanks, was für die vorliegende Erfindung von Bedeutung ist. Noch wichtiger kann die Tatsache werden, dass in der Realität oft die Einbauhöhe H begrenzt ist, gleichzeitig aber kein quaderförmiger Raum mit dieser Höhe zur Verfügung steht, weil andere Bauteile vorhanden sind. Dies kann insbesondere bei mobilen Anwendungen, beispielsweise bei Kühlfahrzeugen mit im Bodenbereich angeordneten Kryotanks von Bedeutung sein.

Wie die Fig. 3 schematisch zeigt, können bei gleicher Einbauhöhe H in einer Konfiguration, bei der die Mittelpunkte 7 benachbarter Einzeltanks 2 auf den Ecken gleichseitiger Dreiecke liegen, Einzelbehälter 2 mit einem größeren Radius R untergebracht werden, die ein größeres Speichervolumen bereitstellen als die in Fig. 2 dargestellten Einzeltanks 2. Sofern andere Bauteile in den Aussparungen 13 sinnvoll angeordnet werden können, ist die Konfiguration gemäß Fig. 3 besonders vorteilhaft. Dies gilt insbesondere für die Anwendung bei Kraftfahrzeugen, in denen eine solche Konfiguration unter einem tragenden Grundgestell angeordnet wird, wobei eine gewisse Bodenfreiheit, also ein Abstand zur Straße, sichergestellt sein muss.

Fig. 4 veranschaulicht schematisch eine Tankanordnung mit fünf Einzeltanks 2, deren Mittelpunkte zusammen ein gleichseitiges Trapez bilden. Bei einer Vergrößerung der Anzahl an Einzeltanks 2 wird der Anteil an nicht nutzbarem Raum in einem Quader immer kleiner, so dass die Vorteile zunehmen. Es sei darauf hingewiesen, dass es je nach Art der Isoliertechnik möglich ist, entweder die Einzeltanks 2 jeweils einzeln zu isolieren und/oder diese gemeinsam mit einer Isolierung zu versehen. Dies hängt auch davon ab, ob in den Einzeltanks verschiedene Gase mit unterschiedlichen Siedepunkten gespeichert werden sollen und ob Wärmebrücken zwischen den Einzeltanks 2 erwünscht sind oder nicht.

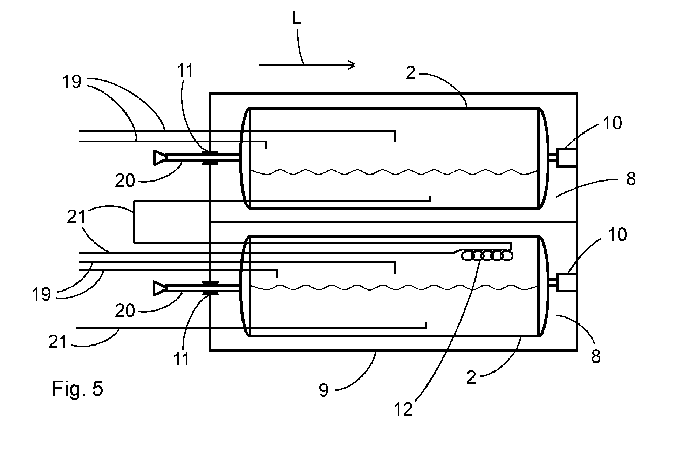

Fig. 5 zeigt schematisch zwei der Einzeltanks 2 einer erfindungsgemäßen Tankordnung, um deren Aufhängung und Verschaltung zu veranschaulichen. Jeder Einzeltank 2 ist zylindrisch ausgebildet und an einem Ende mit einem Festlager 10 und an seinem anderen Ende mit einem Loslager 11 in einem Gehäuse 9 gehalten. Sofern die Einzelbehälter 2 eine Vakuum-Zwischenisolierung aufweisen, kann in das Loslager 11 ein Vakuumanschluss 20 integriert sein, der bei Wartungen die Wiederherstellung bzw. Verbesserung des Vakuums ermöglicht. Jeder Einzeltank 2 weist außerdem Anschlussleitungen 19 und Entnahmeleitungen 21 auf. Diese ermöglichen das Befüllen der Einzeltanks 2 sowie Entnahmen aus dem Gasraum bzw. dem Flüssigkeitsraum und ermöglichen bei Wartungen jedenfalls auch das Reinigen und Spülen der Einzeltanks 2.

Fig. 5 veranschaulicht, dass zwischen zwei Einzeltanks 2 eine Wärmebrücke gebildet werden kann. So etwas ist z. B. wünschenswert, wenn zwei Gase mit unterschiedlichen Siedepunkten tiefkalt gespeichert werden sollen, wobei das tiefer siedende Gas dazu benutzt werden kann, das höher siedende Gas unterhalb seines Siedepunkts zu halten. Diese Situation tritt beispielsweise beim gemeinsamen Transport von flüssigem Stickstoff und flüssigem Erdgas auf, so dass es möglich ist, Verluste an Erdgas durch Verdampfung vollständig zu vermeiden. Im vorliegenden Ausführungsbeispiel wird dazu aus dem oberen Einzeltank 2, der z. B. flüssigen Stickstoff enthalten könnte, Flüssigkeit entnommen und durch eine Wärmetauscherleitung 12 im unteren Einzeltank 2 geleitet, bevor eine weitere Verwendung oder Abgabe an die Umwelt stattfindet.

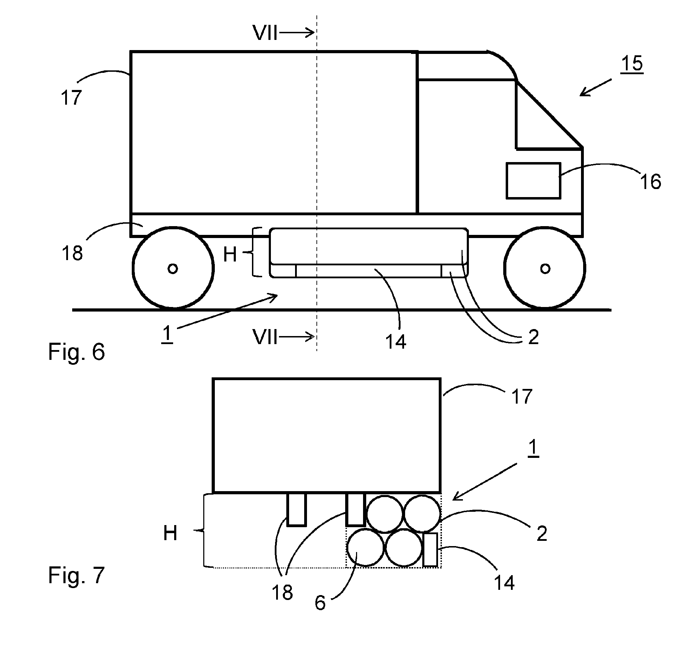

Fig. 6 und 7 veranschaulichen die Anwendung einer erfindungsgemäßen Tankanordnung 1 befestigt unter einem Kühlfahrzeug 15 mit einer Einbauhöhe H. Die Fig. 6 zeigt diese Konfiguration schematisch in einer Seitenansicht, während Fig. 7 diese Konfiguration in einem Querschnitt entlang der Linie VII - VII veranschaulicht. Besonders sinnvoll kann die vorliegende Erfindung eingesetzt werden, wenn das Kühlfahrzeug 15 einen Kühlraum 17 aufweist, der mittels tiefkalten flüssigen Gasen gekühlt wird. Insbesondere wenn der Verbrennungsmotor 16 mit flüssigem Erdgas angetrieben wird, kann dieses ebenfalls tiefkalt gespeichert und bei seiner Verdampfung zur Kühlung des Kühlraums 17 eingesetzt werden.

Wie Fig. 7 zeigt, wird bei dem Kühlfahrzeug 15 der Kühlraum 17 von zwei Traversen 18 getragen, die zur Grundstruktur des Kühlfahrzeugs 15 gehören. Die erfindungsgemäße Anordnung der Einzeltanks 2 unterhalb und direkt neben einer der Traversen 18 bei gleichzeitiger Anbringung eines Armaturenkastens 14, der von der Seite des Kühlfahrzeugs 15 leicht zugänglich ist, ergibt sich eine Ausnutzung des zur Verfügung stehenden Bauraums, die auf andere Weise, insbesondere mit nur zwei größeren Tanks, nicht erreichbar wäre. Gleichzeitig können die kleineren Tanks für Betriebsdrücke von 20 oder sogar 30 bar ausgelegt werden bei nur moderater Erhöhung der Wandstärken, was insgesamt zu einem günstigeren Gewicht als bei größeren Tanks führt.

Die vorliegende Erfindung eignet sich daher insbesondere für mobile Anwendungen, bei denen zwei unterschiedliche tiefkalt verflüssigte Gase gleichzeitig transportiert werden, insbesondere für Kühlfahrzeuge, die tiefkalt verflüssigten Stickstoff und tiefkalt verflüssigtes Erdgas zur Kühlung und zum Antrieb mitführen. Durch die Zahl von vier oder mehr gleichartigen Einzeltanks ist eine flexible Aufteilung des verfügbaren Speicherraums für die beiden Gase je nach den Einsatzbedingungen möglich. Der umweltfreundliche Einsatz von Erdgas kann dadurch ausgeweitet werden.

### Bezugszeichenliste

- 1: Tankanordnung
- 2: Einzeltank
- 3: Innenmantel
- 4: Außenmantel
- 5: Zwischenisolierung (Vakuum, Strahlungsschilde)
- 6: Querschnittsfläche des Einzeltanks
- 7: Mittelpunkt
- 8: Außenisolierung
- 9: Gehäuse
- 10: Festlager
- 11: Loslager
- 12: Wärmetauscherleitung
- 13: Aussparung
- 14: Armaturenkasten
- 15: Kühlfahrzeug
- 16: Verbrennungskraftmaschine
- 17: Kühlraum
- 18: Traverse
- 19: Anschlussleitung
- 20: Vakuumleitung
- 22: Entnahmeleitung
- H: Einbauhöhe
- r: Kleiner Radius
- R: Großer Radius
- L: Längsrichtung
- LG: tiefkalt verflüssigtes Gas
- LNG: tiefkalt verflüssigtes Erdgas
- LIN: tiefkalt verflüssigter Stickstoff
- LOX: tiefkalt verflüssigter Sauerstoff
- LCO2: tiefkalt verflüssigtes Kohlendioxid

## Patentansprüche

1. Tankanordnung (1) zum Speichern und/oder Transportieren mindestens eines tiefkalt verflüssigten Gases (LG) in drei oder mehr Einzeltanks (2), die jeweils einzeln und/oder gemeinsam thermisch isoliert und gemeinsam raumsparend dicht nebeneinander angeordnet sind, wobei mindestens zwei der Einzeltanks (2) zur Befüllung mit dem gleichen tiefkalt verflüssigten Gas (LG) ausgestaltet sind.

2. Tankanordnung (1) nach Anspruch 1, wobei die Einzeltanks (2) für Drücke bis 10 bar, vorzugsweise bis 20 bar, besonders bevorzugt bis 30 bar ausgelegt sind.

3. Tankanordnung (1) nach Anspruch 1 oder 2, wobei die Einzeltanks (2) insbesondere für tiefkalt verflüssigtes Erdgas (LNG), tiefkalt verflüssigten Stickstoff (LIN), tiefkalt verflüssigten Sauerstoff (LOX) und/oder tiefkalt verflüssigtes Kohlendioxid (LCO2) ausgelegt sind.

4. Tankanordnung (1) nach einem der Ansprüche 1 bis 3, wobei mindestens eine Wärmebrücke (12) zwischen zwei oder mehr Einzeltanks (2) vorhanden ist, so dass Wärme zwischen diesen Einzeltanks (2) übertragbar ist.

5. Tankanordnung (1) nach einem der vorhergehenden Ansprüche, wobei die Einzeltanks (2) zylindrisch geformt und in einer Längsrichtung (L) langgestreckt sind und einen Außenmantel (4) sowie eine kreisförmige Querschnittsfläche (6) mit einem Mittelpunkt (7) aufweisen und in der Längsrichtung (L) parallel ausgerichtet sind.

6. Tankanordnung (1) nach Anspruch 5, wobei die Mittelpunkte (7) der kreisförmigen Querschnittsflächen (6) ein Vieleck aufspannen, insbesondere ein Trapez für eine ungerade Anzahl von Einzeltanks (2) und ein Parallelogramm bei einer geraden Anzahl von Einzeltanks (2).

7. Tankanordnung (1) nach einem der vorhergehenden Ansprüche, wobei die Einzeltanks (2) für mindestens zwei verschiedene tiefkalt verflüssigte Gase (LG) ausgelegt und über Anschlussleitungen (19) miteinander und/oder mit einer Anwendung, insbesondere einem Kühlraum (17) eines Kühlfahrzeuges (15), verbunden sind.

8. Tankanordnung (1) nach einem der vorhergehenden Ansprüche, wobei thermische Dehnungen der Einzeltanks (2) durch eine Befestigung mittels mindestens eines Loslagers (11) ausgleichbar sind.

9. Tankanordnung (1) nach Anspruch 7 oder 8, wobei Anschlussleitungen (19) an gegenüberliegenden Seiten der Tankanordnung (1) an den Einzeltanks (2) angebracht sind.

10. Tankanordnung (1) nach einem der vorhergehenden Ansprüche, wobei mindestens ein Einzeltank (2) eine Wärmetauscherleitung (12) aufweist.

11. Tankanordnung (1) nach einem der vorhergehenden Ansprüche, wobei die Einzeltanks (2) in einem Gehäuse (9) eingebaut sind und ein Armaturenkasten (14) parallel zur Längsrichtung (L) und seitlich zugänglich in oder an dem Gehäuse (9) installiert ist.

12. Verfahren zum gemeinsamen Speichern und/oder Transportieren von mindestens zwei tiefkalt verflüssigten Gasen (LG) in einer Tankanordnung (1) mit drei oder mehr einzeln und/oder gemeinsam thermisch isolierten Einzeltanks (2), die raumsparend dicht nebeneinander angeordnet sind, wobei ein erster Teil der Einzeltanks (2) mit einem ersten Gas und ein zweiter Teil mit einem zweiten Gas gefüllt werden.

13. Verfahren nach Anspruch 12, wobei tiefkalt verflüssigter Stickstoff (LIN) und tiefkalt verflüssigter Brennstoff (LNG) getrennt voneinander in den Einzeltanks (2) gespeichert werden und der tiefkalt verflüssigte Brennstoff (LNG), insbesondere Erdgas, direkt oder indirekt durch den flüssigen Stickstoff (LIN) gekühlt beziehungsweise auf einer Temperatur unterhalb seines Siedepunktes gehalten wird.

14. Verfahren nach Anspruch 12, wobei tiefkalt verflüssigter Stickstoff (LIN) und tiefkalt verflüssigter Sauerstoff (LOX) getrennt voneinander in den Einzeltanks (2) gespeichert und bei Bedarf in einer Anwendung (17) zu einem luftähnlichen Gemisch zusammen geführt werden.

15. Verfahren nach Anspruch 12, wobei beim Füllen der Einzeltanks (2) mit demjenigen tiefkalt verflüssigten Gas (LG) begonnen wird, dessen Füllzeit die längere ist, insbesondere mit dem niedriger siedenden Gas oder mit dem Gas, welches in größerer Menge nachgefüllt werden soll.
